(19) Europäisches Patentamt / European Patent Office / Office européen des brevets

(11) **EP 1 483 530 B1**

(12) **EUROPÄISCHE PATENTSCHRIFT**

(45) Veröffentlichungstag und Bekanntmachung des Hinweises auf die Patenterteilung:
**14.02.2007 Patentblatt 2007/07**

(51) Int Cl.:
***F16M 11/10*** *(2006.01)*

(21) Anmeldenummer: **03743851.2**

(22) Anmeldetag: **06.03.2003**

(86) Internationale Anmeldenummer:
**PCT/EP2003/002319**

(87) Internationale Veröffentlichungsnummer:
**WO 2003/076844 (18.09.2003 Gazette 2003/38)**

(54) **STATIVKOPF, INSBESONDERE KAMERASTATIVKOPF**

TRIPOD HEAD, IN PARTICULAR CAMERA TRIPOD HEAD

TETE DE TREPIED, EN PARTICULIER TETE DE TREPIED POUR APPAREIL PHOTOGRAPHIQUE

(84) Benannte Vertragsstaaten:
**AT BE BG CH CY CZ DE DK EE ES FI FR GB GR HU IE IT LI LU MC NL PT RO SE SI SK TR**

(30) Priorität: **13.03.2002 DE 10211046**

(43) Veröffentlichungstag der Anmeldung:
**08.12.2004 Patentblatt 2004/50**

(73) Patentinhaber: **Sachtler GmbH & Co. KG**
**85386 Eching (DE)**

(72) Erfinder: **MOLLENHAUER, Berthold**
**81379 München (DE)**

(74) Vertreter: **HOFFMANN EITLE**
**Patent- und Rechtsanwälte**
**Arabellastrasse 4**
**81925 München (DE)**

(56) Entgegenhaltungen:
DE-A- 2 457 267     DE-A- 2 657 692
DE-A- 2 701 520     DE-A- 3 026 379
DE-A- 3 739 080     DE-A- 3 908 682
GB-A- 2 189 042     US-B1- 6 328 487

**Beschreibung**

Technisches Gebiet

Die vorliegende Erfindung betrifft einen Stativkopf, insbesondere einen Kamerastativkopf. Dies bedeutet für die Erfindung, dass auf dem Stativkopf als Aufbau nicht nur eine Kamera, sondern auch andere Gegenstände bestimmt sind, wie beispielsweise Ziel- und Messvorrichtungen oder dergleichen.

Kameras, die - beispielsweise aufgrund ihres Gewichts oder ihrer Größe oder aufgrund besonderer Anforderungen an eine ruhige Kameraführung - nicht von Hand gehalten werden können, ruhen auf einem Kamerastativ oder einem Kamerapedestal. Dabei ist die Kamera auf einem Kamerastativkopf um eine horizontale Achse (Neigeachse) und eine vertikale Achse (Schwenkachse) drehbar gelagert, damit der Kameramann mit dem Kameraobjektiv bewegten Objekten folgen kann. (Im folgenden wird allein der Begriff "Kamerastativ" verwendet; die Ausführungen gelten jedoch ebenso für Kamerapedestale.) Beim Neigen der Kamera, d.h. beim Drehen des Kamerastativkopfes um seine Neigeachse, bewirkt der Abstand des Schwerpunkts der Kamera von dieser Neigeachse (Schwerpunktshöhe) zusammen mit der Gewichtskraft der Kamera ein vom Neigewinkel abhängiges Drehmoment um die Neigeachse.

Die Einrichtung für den Gewichtsausgleich soll durch die Kompensation dieses Neigemoments ein kraftfreies Neigen der Kamera ermöglichen. Dabei ist es erforderlich, dass der Gewichtsausgleich aufgrund des raschen Wechsels des Lastmoments beim Aufsetzen von verschiedenen Kameras oder von Kamerazubehör wie Teleprompftern etc. schnell und einfach an verschiedene Gewichte und verschiedene Schwerpunktshöhen anpassbar ist.

Außerdem soll der Gewichtsausgleich die Kamera in jeder Neigeposition direkt und unmittelbar ohne jede Nachbewegung halten, und zwar innerhalb eines Neigebereichs von mindestens $\pm$ 90°, um das gesamte räumliche Gesichtsfeld beim Neigen der Kamera abdecken zu können.

Um sanfte Neigebewegungen zu ermöglichen, sollte der Kamerastativkopf darüber hinaus eine vom Gewichtsausgleich unabhängige, möglichst ebenfalls verstellbare, reibungsfreie Dämpfungseinrichtung aufweisen.

Stand der Technik

Bekannte Kamerastativköpfe weisen zum Dämpfen der Neigebewegung beispielsweise ein hydraulisches Dämpfungsglied mit einstellbarem Drehwiderstand auf, wie es in der Deutschen Patentschrift 24 57 267 beschrieben ist. Auch das Deutsche Patent P 26 57 692 beschreibt eine Dämpfungseinrichtung für Kamerastativköpfe.

Hinsichtlich des Gewichtsausgleichs ist es beispielsweise bekannt, das Neigemoment mit mehreren auf der Neigeachse hintereinander angeordneten Scheibentorsionsfedern aus Gummi zu kompensieren (DE 30 26 379). Der Gewichtsausgleich kann hier über das Zu- oder Abschalten von einzelnen Federn angepasst werden.

Aus der DE 39 08 682 A1 ist eine Vorrichtung zum Ausgleich des Gewichtes eines um eine Nickachse zu schwenkenden Gegenstands bekannt. Ein Rückstellmoment wirkt mit Hilfe einer Biegefederanordnung über einen Hebelarm auf die Nickachse. Um den Nickbereich zu vergrößern und bei allen Nickwinkeln eine ideale Drehmomentkompensation zu erzielen, weist die Ausgleichsvorrichtung ein Untersetzungsgetriebe auf, wobei die Achse der Eingangswelle die Nickachse ist und wobei die Biegefederanordnung über einen Hebelarm auf die Ausgangswelle wirkt. Aus der DE-OS 27 01 520 ist ein Kippbefestigungskopf bekannt, bei dem für den Gewichtsausgleich über ein Getriebe die Neigebewegung auf ein Tellerfederpaket übertragen wird, welches mit der Neigebewegung zusammengedrückt wird.

Die GB 2 189 042 A beschreibt einen Stativkopf für Kameras, bei dem durch die Neigebewegung über Mitnehmer eine Schraubenfeder zusammengedrückt wird, die hierzu im Raume schwenkbar gelagert ist.

Aus der DE 37 39 080 A1 ist eine Federvorrichtung zum Gewichtsausgleich für Stative bekannt zur Kompensation des Drehmomentes, das bei Stativen durch das Gewicht einer Nutzlast bei deren Verdrehen um eine horizontale Achse entsteht. Es wird ein Federsystem vorgeschlagen, bei dem durch Realisierung besonderer geometrischer Bedingungen für den Einsatz von zum Beispiel Zug- und Druckfedern ein Ausgleichsdrehmoment entsteht, das weitgehend dem Sinus des Drehwinkels proportional ist und damit gute Balance gewährleistet. Damit kommt ein Stativkopf mit einem Sockelelement und einer neigbaren Anordnung zur Anwendung, die einerseits um eine Neigeachse drehbar mit dem Sockelelement verbunden ist und an der andererseits fest ein Kameraaufbau anbringbar ist. Eine Einrichtung zum Ausgleichen des Neigemoments weist eine Mitnehmeranordnung auf, die an einer von der Neigeachse beabstandeten Stelle an der neigbaren Anordnung angebracht ist und beim Neigen des Aufbaus auf eine Feder einwirkt und dadurch die Feder über die Mitnehmeranordnung ein annähernd sinusförmiges Rückstellmoment auf die neigbare Anordnung und somit auf den Aufbau ausübt. Die Mitnehmeranordnung weist ein Zugseil auf, das im Zusammenhang mit dem Mitnehmer und der Feder steht. Das Zugseil verläuft senkrecht zur Neigeachse zu einer Umlenkrolle und verläuft danach weiterhin senkrecht zur Neigeachse bis zu einer Verbindung mit der Feder, die ortsfest angebracht ist. Die Stelle des Mitnehmers ist zur Anpassung an unterschiedliche Kameragewichte ortsveränderbar, was sich jedoch oft auf die Umschlingung der Umlenkrolle auswirkt, so dass nur angenähert für unterschiedliche Kameragewichte ein sinusförmiger Verlauf des Rückstellmomentes erzielbar ist.

Darstellung der Erfindung

Der vorliegenden Erfindung liegt die Aufgabe zugrunde, einen Kamerastativkopf mit einer Einrichtung zum Ausgleichen eines bei dieser Neigebewegung auftretenden Gewichtsmoments zu schaffen, die das Neigemoment möglichst exakt kompensiert und dennoch kompakt ausgeführt werden kann.

Diese Aufgabe wird erfindungsgemäß durch einen Stativkopf, insbesondere Kamerastativkopf, gelöst, der umfasst:

- ein Sockelelement sowie eine neigbare Anordnung, die einerseits um eine Neigeachse drehbar mit dem Sockelelement verbunden und an der andererseits fest ein Aufbau, insbesondere ein Kameraaufbau, anbringbar ist; sowie

- eine Einrichtung zum Ausgleichen eines bei der Neigebewegung auftretenden Neigemoments, welche zumindest ein energiespeicherndes Element aufweist, das sich am Sockelelement abstützt. Dabei weist die Einrichtung zum Ausgleichen des Neigemoments eine Mitnehmeranordnung auf, die an einer von der Neigeachse beabstandeten Stelle an der neigbaren Anordnung angebracht ist und beim Neigen des Aufbaus auf das energiespeichernde Element einwirkt und dadurch das energiespeichernde Element über die Mitnehmeranordnung ein im Wesentlichen sinusförmiges Rückstellmoment auf die neigbare Anordnung und somit auf den Aufbau ausübt. Die Mitnehmeranordnung weist mindestens einen Mitnehmer auf, der mit der neigbaren Anordnung um die Neigeachse bewegbar ist sowie mindestens ein Zugelement, das im Wirkzusammenhang steht mit dem Mitnehmer und dem energiespeichernden Element.

Das Zugelement verläuft ausgehend vom Mitnehmer im Wesentlichen senkrecht zur Neigeachse zu einer Ablenkstelle, wonach das Zugelement im Wesentlichen parallel zur Neigeachse verläuft.

Unter dem energiespeichernden Element versteht man in erster Linie ein Element, welches potentielle Energie speichert.

Durch das Einsetzen eines von einer Mitnehmeranordnung durch die Neigebewegung beaufschlagten Zugelements für das Einwirken auf mindestens ein energiespeicherndes Element erreicht man mit erheblicher Steigerung der Kompaktheit des Stativkopfs ein im Wesentlichen sinusförmiges Verhalten des Rückstellmoments auf die neigbare Anordnung und somit auf den Stativaufbau und insbesondere den Kameraaufbau. Die besondere Kinematik und Krafteinleitung bedingen einen wirkungsvollen Einfluss auf das erwünschte sinusförmige Verhalten des Rückstellmoments, wobei die Möglichkeit realisiert ist, dass das zumindest eine energiespeichernde Element im Wesentlichen stationär gehalten werden kann. Es bedarf lediglich der von der Neigebewegung ausgelösten Bewegung des oder der Mitnehmer, die sich besser in einem begrenzten Raum halten lassen, um eine kompakte Gestaltung des Stativkopfs zu realisieren. Auch wenn im Sinne einer kinematischen Umkehrung erfindungsgemäß die Mitnehmer stationär angeordnet sind und das energiespeichernde Element sich mit der neigbaren Anordnung bewegt, kann sich diese Bewegung des energiespeichernden Elements in Grenzen halten, um eine kompakte Gestaltung des Stativkopfs realisieren zu können.

Das energiespeichernde Element kann eine Druckfeder oder Zugfeder oder Torsionsfeder oder Biegefeder sein. Eine Torsionsfeder würde sich deswegen vorteilhaft auswirken, weil diese eine hohe Energiedichte beinhaltet. Das Zugelement kann im Verlauf zwischen Mitnehmer und dem energiespeichernden Element zumindest einmal abgelenkt sein.

Bevorzugt ist das Zugelement zumindest einmal auf der Verlaufstrecke zwischen Mitnehmer und dem einen Ende der Druckfeder abgelenkt. Dabei ist die Zuordnung vom Mitnehmer zur Neigeachse, die Federvorspannung der Druckfeder und der Abstand zwischen Neigeachse und Ablenkstelle so gewählt, dass das gegenwirkende Ausgleichsmoment (Rückstellmoment) die Formel

$$M = \left(1 + \frac{r_{s,\max} - r_b + L_{vw,\min}}{\sqrt{r_b^2 + r_s^2 - 2 \cdot r_b \cdot r_s \cdot \cos\alpha}}\right) \cdot c \cdot r_b \cdot r_s \cdot \sin\alpha$$

mit der Zielsetzung erfüllt, dass der Wert des Bruches in der Klammer d. h. ($r_{s,\max}$ - $r_b$ + $L_{vw,\min}$) gleich Null oder nahe bei Null beziehungsweise der Wert in der Klammer 1 oder möglichst nahe bei 1 ist, in welcher Formel sind:

$r_{s,\max}$ = maximaler Abstand zwischen Neigeachse und Mitnehmer

$r_s$ = Abstand zwischen Neigeachse und Mitnehmer

$r_b$ = Abstand zwischen Neigeachse und Auslaufort des Zugelements von der Ablenkstelle

$L_{vw,\min}$ = minimale Federvorspannung

$c$ = Federrate der Einzeldruckfeder

α =         jeweiliger Neigewinkel

Dabei sind $r_{s,max}$, $r_b$ und $L_{vw,min}$ festgelegte Größen. Es verändert sich als variabel der Neigewinkel α. Darüber hinaus ist $r_s$ eine variabel festlegbare Größe. Unter dem Auslaufort versteht man den Ort, an dem das Zugelement die Ablenkstelle in Richtung weg vom Mitnehmer verlässt.

Durch die Ablenkung erzielt man insbesondere eine günstige Beeinflussung des Anfangsverhaltens bei geringen Neigewinkeln, insbesondere aber auch ein günstiges Verhalten des Rückstellmoments über den gesamten Neigeverlauf zwischen -90 und +90°. Über die Einstellung der Werte $r_s$ und $r_b$ im Zusammenhang mit den anderen Werten lassen sich Raumbedarf und das Verhalten des Rückstellmoments gut beeinflussen.

zur Erhöhung der Leistungsdichte auf engem Raum ist als Alternative zu einer starken Druckfeder ein Bündel von kleiner dimensionierten Druckfedern vorgesehen, wobei als Druckfeder eine Schraubenfeder vorgesehen sein kann.

Zweckmäßigerweise ist die mindestens eine Druckfeder im Wesentlichen parallel zur Neigeachse ausgerichtet und in dieser Richtung zusammendrückbar, wobei die mindestens eine Druckfeder zwischen einer ortsfesten und einer bewegbaren und insbesondere in Richtung der Neigeachse bewegbaren Stützeinrichtung eingespannt sein kann.

Das eine Ende des Zugelements muss vorzugsweise mit der bewegbaren Stützeinrichtung verbunden sein. Dabei ist das andere Ende des Zugelements mit dem Mitnehmer verbunden. Hierbei kann es von Vorteil sein, dass die zwischen den Enden des Zugelements befindliche Ablenkstelle von einer Ablenkrolle gebildet ist, die um ihre eigene Rollenachse drehbar ist. Dadurch können Reibungskräfte reduziert und es kann das Kräfteverhalten im Sinne der Einstellung des Rückstellmoments beeinflusst werden. Dies gilt auch dann, wenn die Ablenkrolle im Wesentlichen an dem Ort schwenkbar gelagert ist, wo das Zugelement vom Mitnehmer kommend nach der Ablenkung die Ablenkrolle in Richtung auf die bewegbare Stützeinrichtung verlässt.

Für das Kräfteverhalten ist es von besonders günstiger Auswirkung, wenn das Zugelement vom Mitnehmer ausgehend einen spitzen Winkel oder im Wesentlichen senkrecht zur Neigeachse zu der Ablenkstelle und nach der Ablenkung im Wesentlichen parallel zur Neigeachse zu der bewegbaren Stützeinrichtung verläuft.

Ein für den angestrebten sinusförmigen Verlauf des Rückstellmoments günstiger Verlauf des Zugelements ist dann gegeben, wenn ein Ende des Zugelements mit der bewegbaren Stützeinrichtung verbunden ist, von dort über die Ablenkstelle zum Mitnehmer, wo das Zugelement mit dem Mitnehmer verbunden ist, und von dort zurück über die Ablenkstelle zur bewegbaren Stützeinrichtung verläuft. Dadurch vereinfacht sich das Befestigen der Enden des Zugelements, was nicht am Mitnehmer erfolgen muss. Insbesondere bei der Verwendung eines Aramidseils, dessen Enden schwierig zu befestigen sind, kann das Zugelement auch als endloses Zugelement zum Einsatz kommen, an dessen Enden am Mitnehmer und der bewegbaren Stützeinrichtung jeweils eine Umschlingung erfolgt. Ein derartiger Verlauf kann im Sinne einer Systemausbalancierung so vorgesehen sein, dass mindestens zwei Zugelemente symmetrisch zur Neigeachse angeordnet sind.

Eine weitere Beeinflussung des Kräfteverhaltens und die dadurch resultierenden Einflüsse auf das sinusförmige Verhalten des Rückstellmoments ist möglich, wenn mindestens ein Mitnehmer um eine zur Neigeachse parallele Achse drehbar angeordnet ist, d. h. der Mitnehmer ein Verbiegen des Zugelements verhindert und für einen entsprechenden Ausgleich sorgt.

Zur Einstellung der Federvorspannung und der Hebelverhältnisse kann der Abstand zwischen Neigeachse und Mitnehmer dadurch veränderbar sein, dass der mindestens eine Mitnehmer senkrecht zur Neigeachse vorzugsweise stufenlos ortsveränderbar und in der jeweiligen Stellung festlegbar ist. Diese Verstellung bewirkt über das Zugelement eine Veränderung der Vorspannung der Druckfedern.

Für eine einfache Befestigung der Enden des Zugelements kann das Zugelement den Mitnehmer durchlaufen, so dass die beiden Enden des umlaufenden Zugelements an der bewegbaren Stützeinrichtung befestigt sind, was einfacher zu bewerkstelligen ist. Dies gilt insbesondere dann, wenn als Zugelement ein geschlagenes beziehungsweise geflochtenes Seil aus Stahl oder Aramidfasern verwendet wird. Diese Aramidfaserseile sind in größerer Dimension aus dem Aufzugsbau und in einer der Erfindung entsprechenden Dimension als Tennisschlägersaiten bekannt. Diese Aramidseile sind bevorzugt mit einem abriebfesten Harz getränkt. Dadurch kann vermieden werden, dass insbesondere bei Wechselbeanspruchung und bei Ablenkungen derartige Seile widerstandsfester sind, da der frühzeitige Abrieb der Fasern innerhalb des Seils stark reduziert werden kann. Diese Seile erlauben wesentlich kleinere Ablenkradien, was insbesondere bei der Erfindung von besonderer Bedeutung ist.

Das Zugelement kann allerdings auch im Mitnehmer eingespannt sein, so dass bei einer Ortsveränderung des Mitnehmers um die Neigeachse auf das Zugelement so eingewirkt wird, dass das Zugelement eine Ortsveränderung der bewegbaren Stützeinrichtung bewirkt und somit ein Zusammendrücken der Druckfeder.

Für eine bessere Führung des Zugelements beziehungsweise des Seils kann an der Ablenkstelle und hier insbesondere in der Ablenkrolle mindestens eine Rille zum teilweise Aufnehmen des Zugelements vorgesehen sein.

Der Mitnehmer kann ein parallel zur Neigeachse ausgerichteter, freikragender Zapfen sein, der im Abstand zur Neigeachse angeordnet ist.

Wenn zuvor die Rede davon war, dass die Druckfeder sich am Sockelelement abstützt und somit im Wesentlichen stationär angeordnet ist, so umfasst die Erfindung dennoch Lösungen, gemäß denen nach Art einer kinematischen Umkehrung die Mitnehmer fest am Sockel und das Zugelement zusammen mit der Druckfeder an der neigbaren Anordnung angebracht ist.

Wenn eine zweite Ablenkung des Zugelements installiert wird, kann innerhalb des Schutzbereichs dieser Erfindung anstatt einer Druckfeder eine Zugfeder zum Einsatz kommen.

Es können in einer symmetrischen Anordnung zur Neigeachse mehrere Zugelemente, bevorzugt zwei Zugelemente, vorgesehen sein. Diese symmetrische Anordnung kann allerdings dadurch realisiert werden, dass ein auf beiden Seiten der Neigeachse vorgesehenes Zugseil im Bereich der Mitnehmer durchlaufend ausgebildet ist. Damit dies bewegungseinwandfrei und ungehindert funktionieren kann, ist jeder Mitnehmer von einer Ablenkkombination gebildet, die jeweils aus zwei Ablenkstellen besteht. Diese Ablenkstellen können jeweils von einer Ablenkrolle gebildet sein, wobei an den zwei Ablenkstellen eine Ablenkstelle von einer festen und die andere von einer schwenkbaren Rolle gebildet ist. Die festen Rollen jedes Mitnehmers sind dabei in einem festen Abstand einander zugeordnet, da sich bei der Neigebewegung der Verlauf zwischen diesen beiden Rollen nicht verändert. Anders ist dies im Bereich der schwenkbaren Rolle. Durch die Schwenkbarkeit folgt diese dem sich mit der Neigung ändernden Verlauf des Zugelements.

Kurze Beschreibung der Zeichnungen

Im folgenden werden Ausführungsbeispiele der Erfindung unter Bezugnahme auf die beigefügten Zeichnungen näher beschreiben. Im einzelnen zeigen:

Fig. 1      eine schematische Ansicht eines Kamerastativs,

Fig. 2a      eine schematische Darstellung des Gewichtsausgleichprinzips der vorliegenden Erfindung in perspektivischer Darstellung mit Anwendung einer Druckfeder,

Fig. 2b      eine schematische Darstellung des Gewichtsausgleichprinzips der vorliegenden Erfindung in perspektivischer Darstellung mit Anwendung einer Zugfeder,

Fig. 2c      eine schematische Darstellung des Gewichtsausgleichprinzips der vorliegenden Erfindung in perspektivischer Darstellung mit Anwendung einer Torsionsfeder,

Fig. 2d      eine schematische Darstellung des Gewichtsausgleichprinzips der vorliegenden Erfindung in perspektivischen Darstellung mit Anwendung eines einzigen Zugseils, welches die Mitnehmeranordnung durchläuft,

Fig. 3      eine perspektivische Ansicht eines schematischen Ausführungsbeispiels eines Kamerastativkopfs mit der Darstellung der neigbaren Anordnung,

Fig. 4      eine andere perspektivische Ansicht des Kamerastativkopfs gemäß Fig. 3, jedoch ohne Darstellung der neigbaren Anordnung,

Fig. 5      eine schematische Stirnansicht des Kamerastativkopfs, ..

Fig. 6      eine Schnittansicht des Kamerastativkopfs entlang der Linie A-A in Fig. 5,

Fig. 7      eine Schnittansicht durch den Kamerastativkopf gemäß Fig. 5 und Fig. 6 entlang der Schnittlinie C-C,

Fig. 8      eine der Fig. 7 ähnliche Schnittansicht, jedoch entlang der Schnittlinie B-B in Fig. 6,

Fig. 9      eine perspektivische Darstellung des Kamerastativkopfs ähnlich der Fig. 3, jedoch in einer etwas anderen Ansicht und in einer Neigelage der neigbaren Anordnung um 50° aus der Null-Lage,

Fig. 10      eine der Schnittansicht der Fig. 7 ähnliche Ansicht, jedoch mit der Neigestellung der Fig. 9 und

Fig. 11      eine der Fig. 8 ähnliche Schnittdarstellung ebenfalls entsprechend der Neigestellung der Fig. 9.

Ausführliche Beschreibung bevorzugter Ausführungsformen der Erfindung

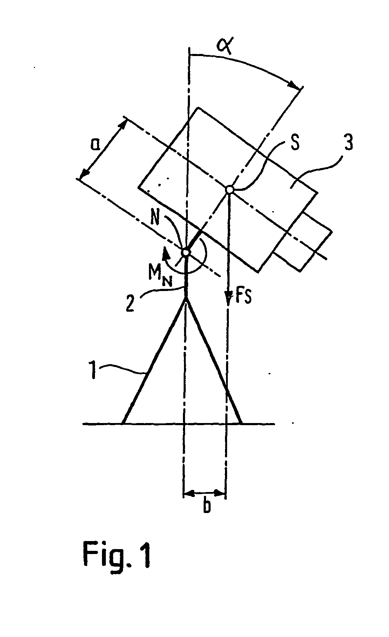

Fig. 1 zeigt schematisch ein Kamerastativ 1 mit einem Kamerastativkopf 2 sowie einer darauf angebrachten Kamera 3. Die Kamera ist gegenüber ihrer Gleichgewichtslage, in der sich ihr Schwerpunkt S genau vertikal oberhalb der quer zur Zeichenebene verlaufenden Neigeachse N befindet, um den Neigewinkel $\alpha$ ausgelenkt. Aufgrund des Schwerpunktsabstands a des Schwerpunkts der Kamera von der Neigeachse N entsteht ein Hebelarm b = a sin $\alpha$, der zusammen mit der Gewichtskraft $F_s$ der Kamera ein Neigemoment $M_N$ um die Neigeachse N bewirkt. Mit wachsendem Winkel $\alpha$ steigt das Neigemoment $M_N = F_S$ a sin $\alpha$ sinusförmig an.

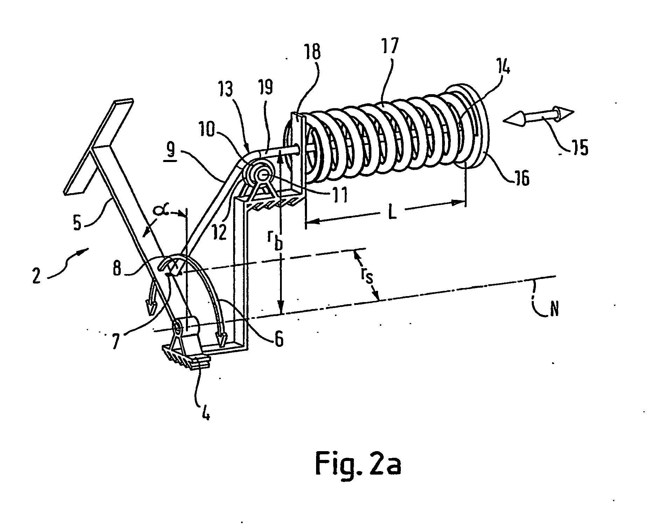

Aus Fig. 2a ist erkennbar in schematischer Darstellung ein Sockelelement 4. An diesem Sockelelement ist um die Neigeachse N neig-, nick- oder kippbar eine neigbare Anordnung 5 gelagert. Auf dieser neigbaren Anordnung wird üblicherweise eine hier nicht dargestellte Kamera befestigt, die ebenfalls dann der Neigebewegung unterworfen ist. Die Neigebewegung ist durch den Doppelpfeil 6 angedeutet. An der neigbaren Anordnung befindet sich schematisch dargestellt ein Mitnehmer 7, an dem ein Ende 8 eines Seiles 9 befestigt. Hier verläuft das Seil 9 in einem spitzen Winkel zur Neigeachse N (verläuft bevorzugt senkrecht zur Neigeachse) zu einer Ablenkrolle 10, die um ihre Achse 11 drehbar ist. Diese Ablenkrolle 10 definiert eine Ablenkstelle 13 und weist eine Rille 12 auf, in der das Seil 9 geführt verläuft. Das andere Ende 14 des Seiles 9 ist an einem entsprechend dem Doppelpfeil 15 bewegbaren Stützelement 16 für eine Schraubenfeder 17 befestigt. Auf der entgegengesetzten Seite stützt sich die Schraubenfeder 17 als Druckfeder an einem festen Stützelement 18 des Sockelelements 4 ab, wobei das Seil 9 durch dieses feste Stützelement 18 verläuft. Im Auslaufort 19 des Seiles 9 an der Ablenkrolle 10 und somit der Ablenkstelle 13 verläuft das Seil 9 im Wesentlichen parallel zur Neigeachse N.

Die vorgespannte Schraubenfeder 17 hat zwischen den Stützelementen 16 und 18 eine Länge L. Diese Länge L entspricht bei einem Neigewinkel $\alpha$ von 0° der Länge der vorgespannten Feder. Der Abstand $r_s$ zwischen dem Mitnehmer 7 und der Neigeachse N hat einen bestimmten eingestellten Wert, der aber auch im bereitgestellten Stativkopf veränderbar sein kann. Weiterhin besteht ein auf einen bestimmten Wert einzustellender Abstand $r_b$ zwischen der Seilachse des parallel zur Neigeachse N verlaufenden Seilabschnitts und der Neigeachse N. Dieser Abstand $r_b$ sowie der Abstand $r_{s,max}$ und die minimale Federvorspannung sind für einen bestimmten Stativkopf in erster Linie so einzustellen, dass einerseits ein optimaler sinusförmiger Verlauf des Rückstellmoments erzielbar ist und andererseits optimale Raumverhältnisse für den Stativkopf geschaffen werden.

Wenn die neigbare Anordnung 5 aus der Null-Lage beispielsweise um den Winkel $\alpha$ geneigt wird, so verlängert sich der Abstand zwischen Mitnehmer 7 und Ablenkstelle 13 mit der Folge, dass bei gleichbleibender Länge des Seiles 9 das Seil entsprechend der Abstandsverlängerung das bewegbare Stützelement 16 bei Betrachtung der Fig. 2a nach links (Pfeil 15) bewegt, wodurch die Schraubenfeder 17 zusammengedrückt und die Länge L verkleinert wird. Dies erzeugt ein vom Winkel $\alpha$ abhängiges Rückstellmoment als Gewichtsausgleich für das von der Kamera ausgeübte Neigemoment, wie dies im Zusammenhang mit Fig. 1 bereits beschrieben worden.ist.

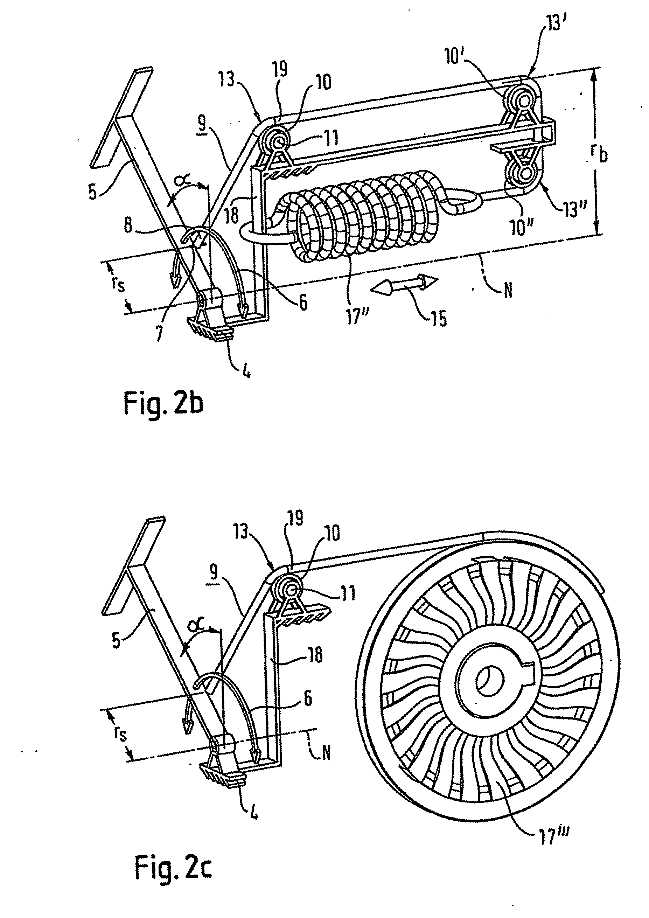

Aus Fig. 2b ist mit ähnlichen Bezeichnungen das Prinzip der Erfindung ähnlich wie in Fig. 2a dargestellt. Hier ist jedoch anstatt einer Druckfeder eine Zugfeder 17'' vorgesehen. Im übrigen sind die Verhältnisse im Wesentlichen gleich und die gleichen Teile mit denselben Bezugszeichen versehen. Es erfolgt hier eine zweite und dritte Ablenkung 13' und 13'' um Ablenkrollen 10', 10'', d. h. also insgesamt eine Umlenkung um 180 Grad. Dadurch ist es möglich, die Schraubenfeder als Zugfeder 17'' wirksam werden zu lassen.

Ähnliche Verhältnisse liegen bei der Darstellung in Fig. 2c vor. Hier allerdings wird eine Torsionsfeder 17''' zum Einsatz gebracht. Auch hier sind mit Fig. 2a übereinstimmende Teile mit denselben Bezugszeichen versehen.

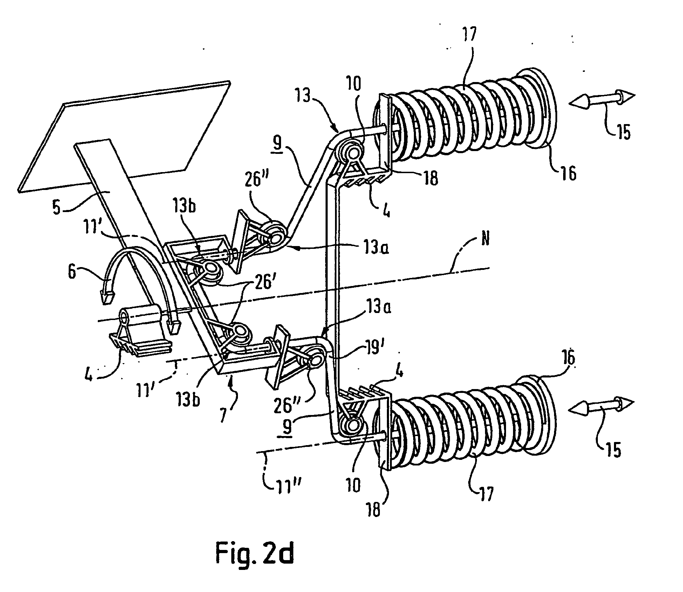

Aus Fig. 2d ist erkennbar, wie bei einer symmetrischen Anordnung zur Neigeachse N ein durchlaufendes Zugseil 9 zur Anwendung kommen kann. Die mit den vorangegangenen Zeichnungen übereinstimmenden Merkmale sind mit denselben Bezugszeichen versehen und werden hier nicht noch mal im Zusammenhang mit Fig. 2d beschrieben. Aus dem Bezugszeichen 4 ergeben sich die Teile, die mit dem Sockelelement verbunden sind und gegenüber der neigbaren Anordnung 5 stationär angeordnet sind. Die Mitnehmeranordnung 7 ist hier mit der neigbaren Anordnung 5 bewegbar angeordnet. Das Zugseil 9 durchläuft diese Mitnehmeranordnung 7. Diese Mitnehmeranordnung 7 besteht aus einer Ablenkrollen-Kombination, die auf beide Seiten der Neigeachse N aus zwei Ablenkstellen 13a und 13b besteht. Die Ablenkstelle 13b wird jeweils von einer Ablenkrolle 26' gebildet. Diese Ablenkrollen 26' sind bevorzugt zusammen mit den Ablenkrollen. 26'' in ihrem Abstand zur Neigeachse N verstellbar und in der jeweiligen Position festlegbar aber nicht schwenkbar an der neigbaren Anordnung 5 angebracht, da sich der Seilverlauf zwischen diesen beiden Rollen hinsichtlich der Verlaufsrichtung nicht verändert, wenn die neigbare Anordnung 5 aus der Null-Lage in eine Neigestellung gebracht wird. Dagegen sind die Rollen 26'' schwenkbar gelagert um eine Achse 11', die hier durch den Seilverlauf zwischen den Rollen 26' und 26'' verläuft. Somit kann sich diese schwenkbare Rolle 26'' an den bei der Neigebewegung sich ändernden Seilverlauf anpassen. Die Achse 11' kann auch durch eine Auslaufstelle 19' des Seils 9 an der Rolle 26'' verlaufen. Im Zusammenhang damit kann die Ablenkrolle 10 ebenfalls schwenkbar gelagert sein, und zwar im Sockelelement 4. Die entsprechende Schwenkachse ist mit 11'' bezeichnet.

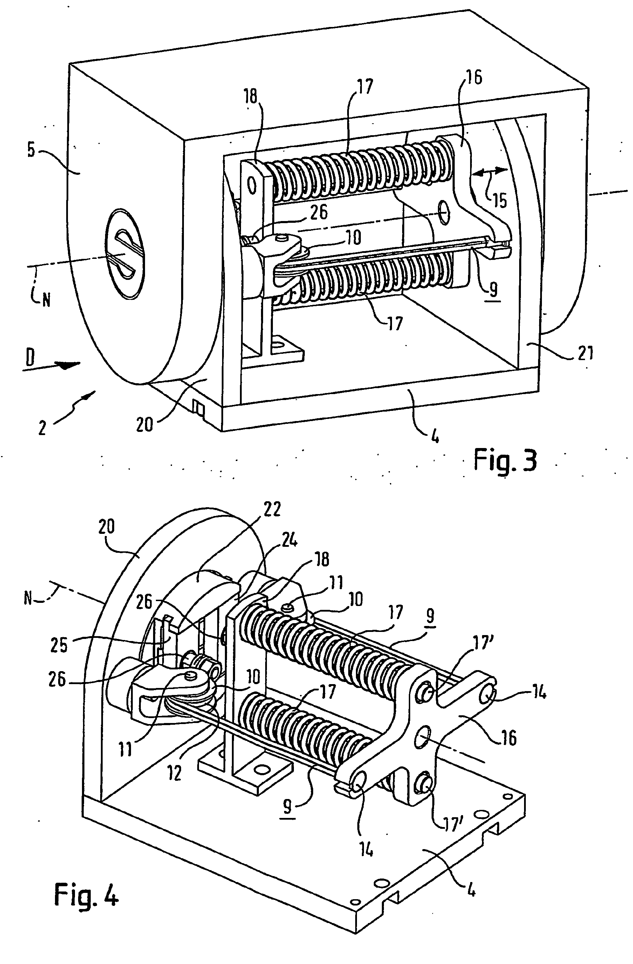

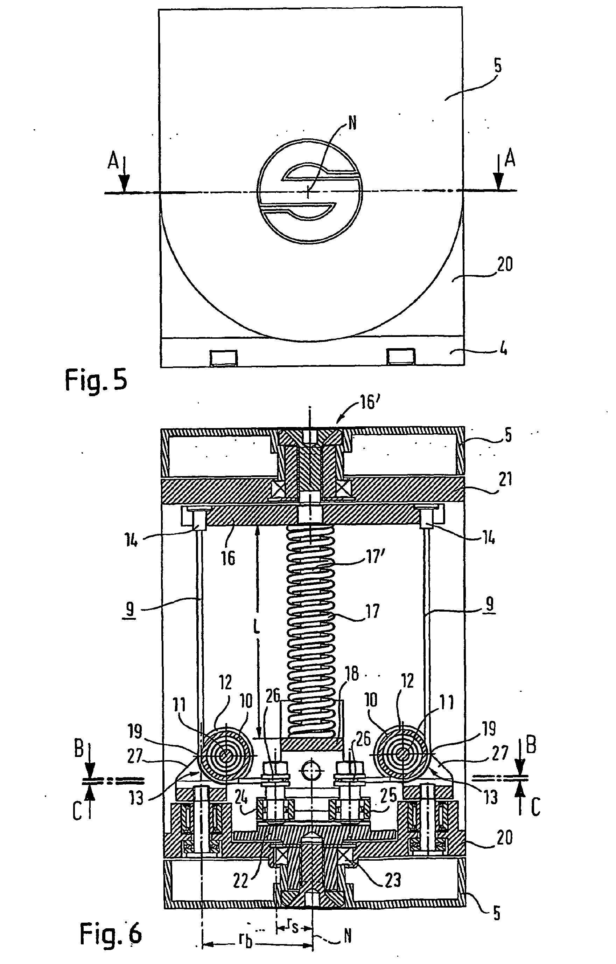

Aus Fig. 3 ist in schematischer Darstellung ein Kamerastativkopf 2 soweit dargestellt, wie dies für die vorliegende Erfindung erforderlich ist. Die neigbare Anordnung 5 ist in dem Sockelelement 4 neigbar gelagert, insbesondere neigbar in einem Winkelbereich vom +/- 90° aus einer Null-Lage, wie sie in Fig. 3 dargestellt ist. Diese neigbare Anordnung 5 vollzieht gegenüber dem Sockelelement 4 diese Neigbewegung um die Neigeachse N. Im Sockelelement 4 ist auf der Neigeachse N bei 16' in Fig. 6 eine in Richtung der Neigeachse N entsprechend dem Doppelpfeil 15 bewegbares Stützelement 16 für Druckfedern 17 gelagert. Die Druckfedern 17 sind hier als Schraubenfedern ausgebildet. Im Abstand zum bewegbaren Stützelement 16 befindet sich ein mit dem Sockelelement 4 verbundenes festes Stützelement 18. Zwischen diesen Stützelementen 16, 18 befinden sich die Druckfedern 17, so dass sie der Abstützung der Druckfedern 17 dienen. In der Null-Lage der neigbaren Anordnung 5 ist die Länge L der vorgespannten Druckfedern 17 durch den Abstand zwischen den Stützelementen 16, 18 bestimmt.

Die neigbare Anordnung 5 ist, wie dies insbesondere aus Fig. 3 ersichtlich ist, auf Höhe der Neigeachse N in Schenkeln 20 und 21 des Sockelelements 4 gelagert. Diese Schenkel 20 und 21 sind im Ausführungsbeispiel senkrecht zu einer Bodenplatte ausgerichtet.

Die neigbare Anordnung 5 ragt mit einem zentralen Drehteil 22 durch den Schenkel 20 und ist dort für die von der Neigebewegung initiierte Drehbewegung in einem Wälzlager 23 gelagert (Fig. 6). In diesem Drehteil 22 sind bei dieser Ausführungsform zwei Schlitten 24 und 25 vorgesehen, die vornehmlich in der in Fig. 4 dargestellten Null-Lage senkrecht zur Neigeachse N verschiebbar und in der jeweiligen Lage feststellbar sind, und zwar in einer symmetrischen Lage zur Neigeachse N. Jeder dieser Schlitten 24 und 25 ist mit einem Mitnehmerzapfen 26 versehen, von denen jeder aus dem jeweiligen Schlitten 24 und 25 parallel zur Neigeachse N vorsteht, wie dies in Fig. 4 dargestellt ist.

Auf jeder Seite ist zwischen dem jeweiligen Mitnehmerzapfen 26 und dem bewegbaren Stützelement 16 eine Ablenkrolle 10 mit Führungsrillen 12 vorgesehen. Diese Ablenkrolle 10 ist um eine Achse 11 drehbar, die in der Null-Lage der neigbaren Anordnung 5 senkrecht zur Neigeachse angeordnet. An dieser Stelle sei vermerkt, dass jede symmetrische Anordnung der vorgeschriebenen Teile über einen Winkelbereich von 360° denkbar ist, wenn die entsprechende Null-Lage definiert ist. Dann stellt sich aus dieser Null-Lage das entsprechende Rückstellmoment ein.

In dem Ausführungsbeispiel gemäß Fig. 3 und Fig. 4 sind zwei Druckfedern 17 als Schraubenfedern vorgesehen. Natürlich kann zur Erhöhung der Leistungsdichte entweder eine einzelne stärkere Feder oder aber auch mehrere Federn im Paket vorgesehen sein. In dem hier dargestellten Ausführungsbeispiel verläuft als Zugelement ein Seil 9, das mit seinem einen Ende 14 in dem bewegbaren Stützelement 16 befestigt ist, zunächst um die Ablenkrolle 10 zum Mitnehmerzapfen 26 und von dort zurück den gleichen Weg über die Ablenkrolle 10 zum bewegbaren Stützelement 16. Dies gilt für beide Seiten. Im Mitnehmerzapfen 26 kann das Seil 9 festgeklemmt sein. In diesem Falle ist der Mitnehmerzapfen 26 um seine zur Neigeachse parallele Achse drehbar. Wenn das Seil 9 den Mitnehmerzapfen 26 in einer Rille frei umschlingt, so kann, wenn eine entsprechende Reibungsarmut vorgesehen ist, auf eine solche Drehbarkeit des Mitnehmerzapfens 26 verzichtet werden. In diesem Zusammenhang ist zu erwähnen, dass das Seil 9 auch als endloses Seil zum Einsatz kommen kann. Dabei wäre das Seil 9 an dem bewegbaren Stützelement 16 im Bereich der Endstelle 14 durch eine einfache Umschlingung festgelegt. Es bedarf also keiner an sich komplizierten Festklemmung des Seilendes, was insbesondere bei Kunstfaserseilen, wie Aramidseilen, der Fall ist. Anstatt der Doppelführung des Seils 9 kann auch ein einzelnes Seil 9 pro Seite vorgesehen sein, welches mit seinem einen Ende 14 im bewegbaren Stützelement 16 befestigt wird und von dort ebenso wie bei der Ausführungsform in Fig. 4 parallel und in Richtung der Neigeachse N zur Ablenkrolle 10 und von dort zum Mitnehmerzapfen 26 geführt sein, wo das andere Ende 15 des Seils 9 befestigt ist. In diesem Falle sind die Mitnehmerzapfen 26 um ihre zur Neigeachse N parallelen Achse drehbar in den Schlitten 24 und 25 gelagert. Wie aus Fig. 6 ersichtlich ist, verläuft das Seil 9 zwischen Ablenkrolle 10. und Mitnehmerzapfen 26 senkrecht zur Neigeachse N, wobei diese entsprechenden Seilabschnitte in der Null-Lage miteinander fluchten.

Es.kann das Zugseil auch für beide Seiten ein einzelnes einfach oder endlos geführtes Seil derart sein, das das Seil beide Mitnehmer 26 durchläuft.

In der Null-Lage haben die Schraubenfedern 17 eine Länge L, die der vorgespannten Feder entspricht. Diese Federvorspannung kann durch Veränderung des Abstands $r_s$ der Mitnehmerzapfen 26 von der Neigeachse verändert werden (Fig. 6). Weiterhin definiert sich bei dieser Vorrichtung gemäß Fig. 6 ein Abstand $r_b$ zwischen dem Verlauf des Seilabschnitts des Seils 9 zwischen Ablenkrolle 10 und bewegbarem Stützelement 16 als zur Neigeachse N paralleler Verlauf und der Neigeachse N. Innerhalb der Schraubenfedern 17 befindet sich eine Führungsachse 17' um ein Ausknicken der als Druckfeder zum Einsatz kommenden Schraubenfeder 17 zu vermeiden, wenn der Neigevorgang vorgenommen wird und diese Druckfeder beziehungsweise diese Druckfedern ein Rückstellmoment erzeugen. Dabei wirken die Seile 9 als Zugelemente, die im Hinblick auf die auftretenden Kräfte möglichst dehnungsfrei sein sollten. Hierzu kann man vorgereckte Seile verwenden, insbesondere geschlagene Stahl- oder Aramidseile.

Fig. 5 dient als Ansicht D gemäß Fig. 3 dem Zeigen der Schnittlinie A-A für die Schnittansicht der Fig. 6.

Entsprechend der Darstellung in Fig. 6, Fig. 7 und Fig. 8 sind die Ablenkrollen 10 jeweils in einem Lagerbock 27 gelagert. Dieser Lagerbock ist um eine Achse 28 vorzugsweise frei drehbar. Diese Achse 28 verläuft parallel zur Neigeachse N und vorzugsweise durch den Auslaufort 19 und liegt in der Verlängerung des Abschnitts des Seils 9 zwischen der Endstelle 14 und der Ablenkrolle 10, wie dies insbesondere aus Fig. 6 ersichtlich ist.

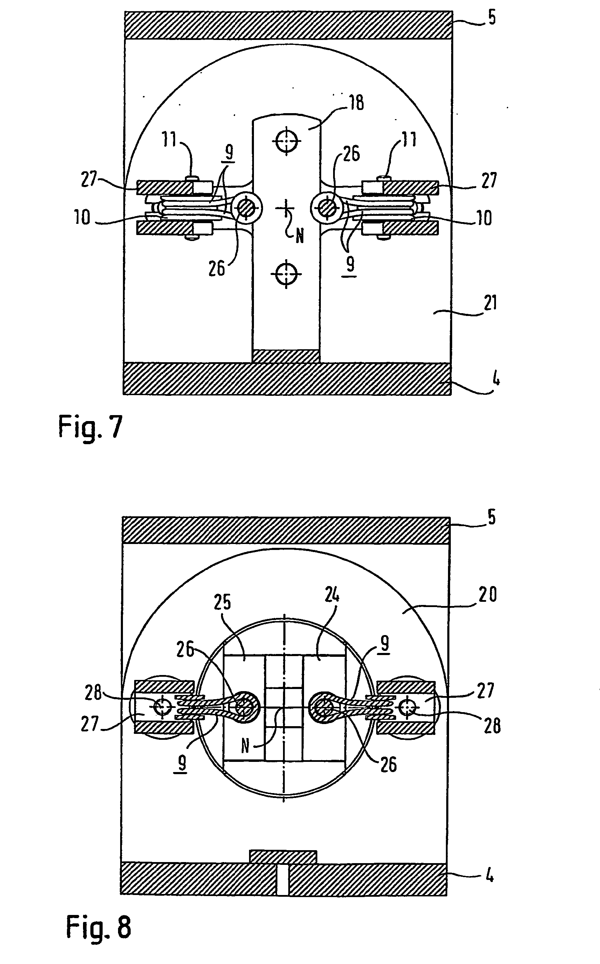

Aus Fig. 7 und Fig. 8 ist deutlich erkennbar, wie bei der Doppelseilführung das Seil 9 jeweils den Mitnehmerzapfen 26 umschlingt, so dass beide freien Enden 14 auf einfache Weise am bewegbaren Stützelement 16 befestigt sind.

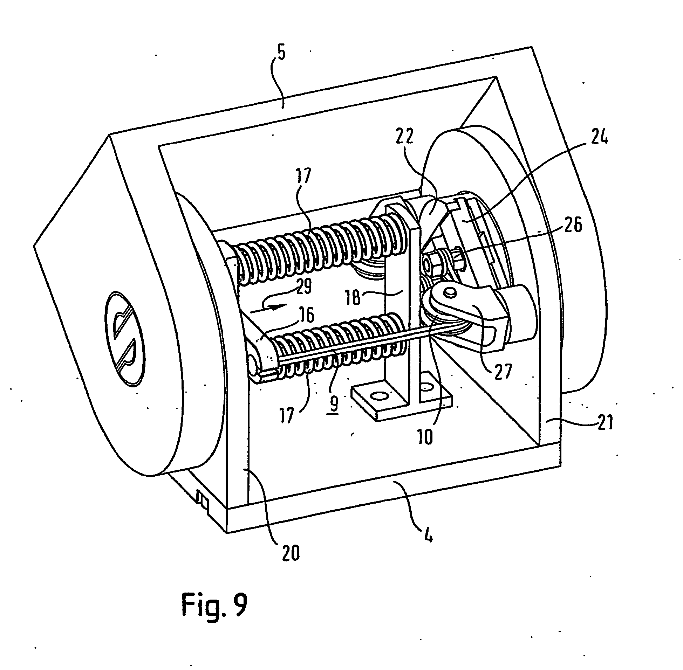

Nachstehend erfolgt eine kurze Beschreibung der Funktionswirkung anhand der Fig. 9, Fig. 10 und Fig. 11. Wenn die neigbare Anordnung 5 aus der in Fig. 3 dargestellten Null-Lage in die in Fig. 9 dargestellte Kipplage von ca.

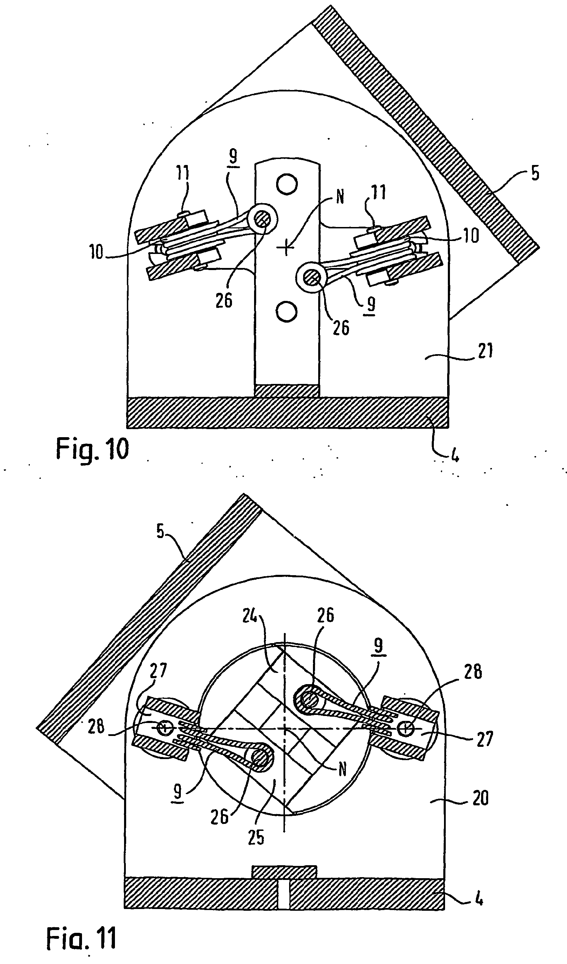

50 Grad gebracht wird, so bewegen sich die Mitnehmer 26 aus der in Fig. 7 beziehungsweise Fig. 8 dargestellten Stellung in die in Fig. 10 beziehungsweise Fig. 11 dargestellte Stellung, je nach Betrachtungsrichtung. Dabei vergrößert sich der Abstand zwischen dem Mitnehmerzapfen 26 und der Ablenkstelle 13. Dies ist deutlich erkennbar, wenn Fig. 7 mit Fig. 10 beziehungsweise Fig. 8 mit Fig. 11 verglichen wird. Dies bewirkt bei gleichbleibender Gesamtlänge des Seils 9 ein Bewegen des bewegbaren Stützelements 16 in Richtung des Pfeils 29 in Fig. 9, was zu einem Verkürzen der in Fig. 6 angegebenen Länge L der Schraubenfeder 17 führt. Dadurch wird die Schraubenfeder 17 mehr zusammengedrückt. Gleiches geschieht, wenn die Schlitten 24 und 25 in Fig. 6 symmetrisch näher zur Neigeachse N bewegt und festgestellt werden, wodurch die in der Null-Lage vorhandene Federvorspannung erhöht werden kann. Die Federvorspannung kann im entgegengesetzten Sinne auch verringert werden.

Die zuvor beschriebene besondere freie Drehlagerung der Ablenkrolle 10 um die zur Neigeachse N parallele Achse 28 ermöglicht ein Ausrichten der Ablenkrolle 10 auf den Seilverlauf in den verschiedenen Neigestellungen, wie dies aus Fig. 10 und Fig. 11 deutlich erkennbar ist. Dabei stellt es sich als optimale Drehlagerung aus, wenn die Achse 28 durch den Auslaufort 19 und in Verlängerung des Seilabschnitts zwischen dem Ende 14 und diesem Auslaufort 19 verläuft.

Bei dieser Ausführungsform bestimmt sich das Rückstellmoment wie folgt:

| Variable | Wert | Einheit | Beschreibung |
|---|---|---|---|
| $r_{s,max}$ | 15 | mm | maximaler Abstand zwischen Neigeachse und Mitnehmer |
| $r_s$ | 5 | mm | Abstand zwischen Neigeachse und Mitnehmer |
| $r_b$ | 38 | mm | Abstand zwischen Neigeachse und Auslaufort des Zugelements |
| $L_{vw,min}$ | 23 | mm | minimale Federvorspannung bei $\alpha = 0°$ und $r_s = r_{s,max}$ |
| c | 20 | N/mm | Federrate der Druckfedern |
|  |  |  |  |
| M | - | Nmm | Rückstellmoment |
| $\alpha$ | - | * | jeweiliger Neigewinkel |

**Das Rückstellmoment ergibt sich zu:**

$$M = \left( 1 + \frac{r_{s,max} - r_b + L_{vw,min}}{\sqrt{r_b^2 + r_s^2 - 2 \cdot r_b \cdot r_s \cdot \cos\alpha}} \right) \cdot c \cdot r_b \cdot r_s \cdot \sin\alpha$$

**Ideal:**

$$r_{s,max} - r_b + L_{vw,min} = 0$$

Momentenverlauf

Patentansprüche

1. Stativkopf, insbesondere Kamerastativkopf, mit

- einem Sockelelement (4, 20, 21),
- einer neigbaren Anordnung (5), die einerseits um eine Neigeachse (N) drehbar mit dem Sockelelement (4, 20, 21) verbunden und an der andererseits fest ein Aufbau, insbesondere ein Kameraaufbau (3), anbringbar ist,
- einer Einrichtung zum Ausgleichen eines bei der Neigebewegung auftretenden Neigemoments (MN), welche zumindest ein energiespeicherndes Element (17) aufweist, das sich am Sockelelement (4) frei abstützt, wobei
- die Einrichtung zum Ausgleichen des Neigemoments eine Mitnehmeranordnung (22, 24, 25, 26) aufweist, die an einer von der Neigeachse (N) beabstandeten Stelle an der neigbaren Anordnung (5) angebracht ist und beim Neigen des Aufbaus auf das energiespeichernde Element (17) einwirkt und **dadurch** das energiespeichernde Element (17) über die Mitnehmeranordnung ein im Wesentlichen sinusförmiges Rückstellmoment (M) auf die neigbare Anordnung und somit auf den Aufbau ausübt, und
- die Mitnehmeranordnung mindestens einen Mitnehmer (26), der mit der neigbaren Anordnung (5) um die Neigeachse (N) bewegbar ist, und mindestens ein Zugelement (9) aufweist, das im wirkzusammenhang steht mit dem Mitnehmer (26) und dem energiespeichernden Element (17), **dadurch gekennzeichnet, dass**
- das Zugelement (9) vom Mitnehmer (26) ausgehend im Wesentlichen senkrecht zur Neigeachse (N) zu einer Ablenkstelle (13) hin, und nach der Ablenkung im Wesentlichen parallel zur Neigeachse (N) verläuft.

2. Stativkopf nach Anspruch 1, **dadurch gekennzeichnet, dass** das energiespeichernde Element eine Druckfeder (17) oder eine Zugfeder oder eine Torsionsfeder oder eine Biegefeder ist.

3. Stativkopf nach Anspruch 1 oder 2, **dadurch gekennzeichnet, dass** das Zugelement (9) in dem Verlauf zwischen Mitnehmer und energiespeicherndem Element zumindest einmal ab- beziehungsweise umgelenkt ist.

4. Stativkopf nach Ansprüche 1, 2, und 3, **dadurch gekennzeichnet, dass** das Zugelement (9) einmal auf der Verlaufstrecke zwischen Mitnehmer (26) und dem einen Ende mindestens einer Druckfeder (17) abgelenkt ist, und die Zuordnung von Mitnehmer (26) zur Neigeachse (N), die Federvorspannung der Druckfeder (17) und der Abstand $r_b$ zwischen Neigeachse (N) und Auslaufort (19) so gewählt werden, dass das gegenwirkende Ausgleich beziehungsweise Rückstellmoment (M) die Formel

$$M = \left(1 + \frac{r_{s,max} - r_b + L_{vw,min}}{\sqrt{r_b^2 + r_s^2 - 2 \cdot r_b \cdot r_s \cdot \cos\alpha}}\right) \cdot c \cdot r_b \cdot r_s \cdot \sin\alpha$$

mit der Zielsetzung erfüllt, dass der Wert des Bruches in der Klammer, d. h. ($r_{s,max}$ - $r_b$ + $L_{vw,min}$) gleich Null oder nahe bei Null beziehungsweise der Wert in der Klammer 1 oder möglichst nahe bei 1 ist, in welcher Formel sind:

$r_{s,max}$ = maximaler Abstand zwischen Neigeachse und Mitnehmer
$r_s$ = Abstand zwischen Neigeachse und Mitnehmer
$r_b$ = Abstand zwischen Neigeachse und Auslaufort des Zugelements von der Ablenkstelle
$L_{vw,min}$ = minimale Federvorspannung
$c$ = Federrate der Einzeldruckfeder
$\alpha$ = jeweiliger Neigewinkel

**5.** Stativkopf nach einem der Ansprüche 1 bis 4, **dadurch gekennzeichnet, dass** ein Bündel von Druckfedern (17) vorgesehen ist.

**6.** Stativkopf nach einem der Ansprüche 1 bis 5, **dadurch gekennzeichnet, dass** die mindestens eine Druckfeder (17) eine Schraubenfeder ist.

**7.** Stativkopf nach einem der Ansprüche 1 bis 6, **dadurch gekennzeichnet, dass** die mindestens eine Druckfeder (17) im Wesentlichen parallel zur Neigeachse (N) ausgerichtet und in dieser Richtung zusammendrückbar ist.

**8.** Stativkopf nach einem der Ansprüche 1 bis 7, **dadurch gekennzeichnet, dass** die mindestens eine Druckfeder (17) zwischen einer ortsfesten (18) und einer bewegbaren (16) und insbesondere in Richtung der Neigeachse (N) bewegbaren Stützeinrichtung eingespannt ist.

**9.** Stativkopf nach einem der Ansprüche 1 bis 8, **dadurch gekennzeichnet, dass** das eine Ende (14) des Zugelements (9) mit der bewegbaren Stützeinrichtung (16) und das andere Ende (8) mit dem Mitnehmer (26) verbunden ist.

**10.** Stativkopf nach einem der Ansprüche 1 bis 9, **dadurch gekennzeichnet, dass** die zwischen den Enden (8, 14) des Zugelements (9) befindliche Ablenkstelle (13) von einer Ablenkrolle (10) gebildet ist, die um ihre eigene Rollenachse (11) drehbar ist.

**11.** Stativkopf nach Anspruch 10, **dadurch gekennzeichnet, dass** die Ablenkrolle (10) im Wesentlichen um eine Achse schwenkbar gelagert ist, die durch einen Ort (19) verläuft, wo das Zugelement (9) vom Mitnehmer (26) kommend nach der Ablenkung die Ablenkrolle (10) in Richtung auf die bewegbare Stützeinrichtung (16) verlässt.

**12.** Stativkopf nach einem der Ansprüche 1 bis 11, **dadurch gekennzeichnet, dass** das Zugelement (9) nach der Ablenkung zur bewegbaren Stützeinrichtung (16) verläuft.

**13.** Stativkopf nach Anspruch 12, **dadurch gekennzeichnet, dass** das eine Ende (14) des Zugelements mit der bewegbaren Stützeinrichtung (16) verbunden ist, von dort über die Ablenkstelle (13) zum Mitnehmer (26), wo das Zugelement (9) mit dem Mitnehmer (26) verbunden ist, und von dort zurück über die Ablenkstelle (13) zur bewegbaren Stützeinrichtung (16) verläuft.

**14.** Stativkopf nach Anspruch 13, **dadurch gekennzeichnet, dass** das Zugelement (9) als endloses Seil ausgebildet ist.

**15.** Stativkopf nach einem der Ansprüche 1 bis 14, **dadurch gekennzeichnet, dass** mindestens zwei Zugelemente (9) symmetrisch zur Neigeachse (N) angeordnet sind.

**16.** Stativkopf nach einem der Ansprüche 1 bis 14, **dadurch gekennzeichnet, dass** bei einer symmetrischen Anordnung beidseits der Neigeachse (N) ein durchlaufendes Zugelement (9) vorgesehen ist, das im Bereich der Mitnehmer (26) durchlaufend ausgebildet ist.

**17.** Stativkopf nach Anspruch 16, **dadurch gekennzeichnet, dass** eine Mitnehmeranordnung (7) aus eine Ablenkkombination gebildet ist, die jeweils aus zwei Ablenkstellen (13a, 13b) besteht.

18. Stativkopf nach Anspruch 17, **dadurch gekennzeichnet, dass** die Ablenkstellen (13a, 13b) von einer Ablenkrolle gebildet sind, wobei an den zwei Ablenkstellen eine Ablenkstelle von einer festen Ablenkrolle (13b) und die andere von einer schwenkbaren Ablenkrolle (13a) gebildet ist.

19. Stativkopf nach einem der Ansprüche 1 bis 18, **dadurch gekennzeichnet, dass** der mindestens eine Mitnehmer (26) um eine zur Neigeachse (N) parallele Achse drehbar ist.

20. Stativkopf nach einem der Ansprüche 1 bis 19, **dadurch gekennzeichnet, dass** der mindestens eine Mitnehmer (26) senkrecht zur Neigeachse (N), vorzugsweise stufenlos, ortsveränderbar und in der jeweiligen Stellung festlegbar ist.

21. Stativkopf nach Anspruch 13, **dadurch gekennzeichnet, dass** das Zugelement (9) den Mitnehmer (26) durchläuft oder umschlingt.

22. Stativkopf nach einem der Ansprüche 1 bis 15 und 19, 20
**dadurch gekennzeichnet, dass** das Zugelement (9) im Mitnehmer (26) eingespannt ist.

23. Stativkopf nach einem der Ansprüche 1 bis 22, **dadurch gekennzeichnet, dass** das Zugelement (9) dehnfrei ist.

24. Stativkopf nach Anspruch 23, **dadurch gekennzeichnet, dass** das Zugelement (9) vorgereckt ist.

25. Stativkopf nach Anspruch 23 oder 24, **dadurch gekennzeichnet, dass** das Seil ein Draht oder ein geschlagenes beziehungsweise geflochtenes Seil aus Stahl oder Aramidfasern ist.

26. Stativkopf nach einem der Ansprüche 1 bis 25, **dadurch gekennzeichnet, dass** in der Ablenkrolle (10) mindestens eine Rille (12) zum teilweise Aufnehmen und Führen des Zugelements (9) vorgesehen ist.

27. Stativkopf nach einem der Ansprüche 1 bis 26, **dadurch gekennzeichnet, dass** der Mitnehmer (26) ein parallel zur Neigeachse (N) ausgerichteter Mitnehmerzapfen ist.

**Claims**

1. Tripod head, in particular camera tripod head, having

   - a base element (4, 20, 21),
   - a tiltable arrangement (5), which on the one hand is connected to the base element (4, 20, 21) to be rotatable about a tilt axis (N), and to which on the other hand a structure, in particular a camera structure (3), can be firmly attached,
   - a device for compensating a tilt moment (MN) occurring during the tilting movement, which has at least one energy-storing element (17), which is supported freely on the base element (4), wherein
   - the device for compensating the tilt moment has a carrier arrangement (22, 24, 25, 26), which is attached to a point on the tiltable arrangement (5) at a distance from the tilt axis (N) and when tilting the structure acts on the energy-storing element (17) and hence the energy-storing element (17) exerts an essentially sinusoidal restoring moment (M) on the tiltable arrangement and hence on the structure via the carrier arrangement, and
   - the carrier arrangement has at least one carrier (26), which can be moved about the tilt axis (N) by the tiltable arrangement (5), and at least one pulling element (9), which cooperates with the carrier (26) and the energy-storing element (17), **characterised in that**
   - the pulling element (9) runs, starting from the carrier (26), essentially vertically to the tilt axis (N) towards a deflection point (13), and after deflection essentially parallel to the tilt axis (N).

2. Tripod head according to claim 1, **characterised in that** the energy-storing element is a compression spring (17) or a tension spring or a torsion spring or a spiral spring.

3. Tripod head according to claim 1 or 2, **characterised in that** the pulling element (9) is deflected or deviated at least once in the path between carrier and energy-storing element.

4. Tripod head according to claims 1, 2 and 3, **characterised in that** the pulling element (9) is deflected once on the path between carrier (26) and the one end of at least one compression spring (17), and the assignment from carrier (26) to the tilt axis (N), the spring pretension of the compression spring (17) and the distance $r_b$ between tilt axis (N) and delivery site (19) are selected so that the counteracting compensation or restoring moment (M) fulfils the formula

$$M = \left(1 + \frac{r_{s,\,max} - r_b + L_{vw,\,min}}{\sqrt{r_b^2 + r_s^2 - 2 \cdot r_b \cdot r_s \cdot \cos\alpha}}\right) \cdot c \cdot r_b \cdot r_s \cdot \sin\alpha$$

with the aim that the value of the fragment in the brackets, that is, $(r_{s,max} - r_b + L_{vw,min})$ is equal to zero or close to zero or the value in the brackets is 1 or as close as possible to 1, in which formula:

$r_{s,max}$ = maximum distance between tilt axis and carrier
$r_s$ = distance between tilt axis and carrier
$r_b$ = distance between tilt axis and delivery site of the pulling element from the deflection point
$L_{vw,min}$ = minimum spring pretension
c = spring rate of individual compression spring
$\alpha$ = particular tilt angle

5. Tripod head according to one of claims 1 to 4, **characterised in that** a set of compression springs (17) is provided.

6. Tripod head according to one of claims 1 to 5, **characterised in that** the at least one compression spring (17) is a helical spring.

7. Tripod head according to one of claims 1 to 6, **characterised in that** the at least one compression spring (17) is aligned essentially parallel to the tilt axis (N) and can be compressed in this direction.

8. Tripod head according to one of claims 1 to 7, **characterised in that** the at least one compression spring (17) is clamped between a fixed (18) supporting device and a movable (16) supporting device which can be moved in particular in the direction of the tilt axis (N).

9. Tripod head according to one of claims 1 to 8, **characterised in that** the one end (14) of the pulling element (9) can be connected to the movable supporting device (16) and the other end (8) can be connected to the carrier (26).

10. Tripod head according to one of claims 1 to 9, **characterised in that** the deflection point (13) situated between the ends (8, 14) of the pulling element (9) is formed by a deflecting roller (10), which can be rotated about its own roller axis (11).

11. Tripod head according to claim 10, **characterised in that** the deflecting roller (10) is mounted to be pivotable essentially about an axis which runs through a site (19), where the pulling element (9), coming from the carrier (26) after deflection, leaves the deflecting roller (10) in the direction of the movable supporting device (16).

12. Tripod head according to one of claims 1 to 11, **characterised in that** the pulling element (9), after deflection, runs to the movable supporting device (16).

13. Tripod head according to claim 12, **characterised in that** the one end (14) of the pulling element is connected to the movable supporting device (16), runs from there via the deflection point (13) to the carrier (26), where the pulling element (9) is connected to the carrier (26), and from there back via the deflection point (13) to the movable supporting device (16).

14. Tripod head according to claim 13, **characterised in that** the pulling element (9) is designed as a continuous cable.

15. Tripod head according to one of claims 1 to 14, **characterised in that** at least two pulling elements (9) are arranged symmetrically to the tilt axis (N).

16. Tripod head according to one of claims 1 to 14, **characterised in that** in a symmetrical arrangement, a continuous pulling element (9), which is designed to be continuous in the region of the carriers (26), is provided on both sides of the tilt axis (N).

17. Tripod head according to claim 16, **characterised in that** a carrier arrangement (7) is formed from a deflection combination, which consists in each case of two deflection points (13a, 13b).

18. Tripod head according to claim 17, **characterised in that** the deflection points (13a, 13b) are formed by a deflecting roller, wherein at the two deflection points, one deflection point is formed by a fixed deflecting roller (13b) and the other by a pivotable deflecting roller (13a).

19. Tripod head according to one of claims 1 to 18, **characterised in that** the at least one carrier (26) can be rotated about an axis which is parallel to the tilt axis (N).

20. Tripod head according to one of claims 1 to 19, **characterised in that** the position of the at least one carrier (26) can be changed vertically to the tilt axis (N), preferably continuously, and can be fixed in the particular position.

21. Tripod head according to claim 13, **characterised in that** the pulling element (9) passes through or wraps around the carrier (26).

22. Tripod head according to one of claims 1 to 15 and 19, 20, **characterised in that** the pulling element (9) is clamped in the carrier (26).

23. Tripod head according to one of claims 1 to 22, **characterised in that** the pulling element (9) is free of extension.

24. Tripod head according to claim 23, **characterised in that** the pulling element (9) is prestretched.

25. Tripod head according to claim 23 or 24, **characterised in that** the cable is a wire or a laid or braided cable made from steel or aramide fibres.

26. Tripod head according to one of claims 1 to 25, **characterised in that** at least one groove (12) for partially receiving and guiding the pulling element (9) is provided in the deflecting roller (10).

27. Tripod head according to one of claims 1 to 26, **characterised in that** the carrier (26) is a carrier pin aligned parallel to the tilt axis (N).

## Revendications

1. Tête de trépied, en particulier tête de trépied pour appareil photographique, comprenant :

   - un élément formant socle (4, 20, 21),
   - un dispositif (5) inclinable, qui, d'une part, est relié, de façon susceptible de tourner autour d'un axe d'inclinaison (N) à l'élément formant socle (4, 20, 21), et sur lequel, d'autre part, est susceptible d'être montée rigidement une structure, en particulier une structure pour appareil photographique (3),
   - un dispositif pour équilibrer un couple d'inclinaison (MN), se produisant lors du mouvement d'inclinaison, qui présente au moins un élément (17) stockant de l'énergie, prenant appui librement sur l'élément formant socle (4),

   où

   - le dispositif de compensation du couple d'inclinaison présente un dispositif à organe d'entraînement (22, 24, 25, 26), monté sur un emplacement, espacé de l'axe d'inclinaison (N) sur le dispositif (5) inclinable, et qui, lors de l'inclinaison de la structure, agit sur l'élément (17) stockant l'énergie et, de ce fait, l'élément (17) stockant l'énergie exerçant, par l'intermédiaire du dispositif à organe d'entraînement, un couple de rappel (N) sensiblement sinusoïdal sur l'agencement inclinable, ainsi que sur la structure, et
   - le dispositif à organe d'entraînement présente au mois un organe d'entraînement (26), déplaçable à l'aide du dispositif (5) inclinable, autour de l'axe d'inclinaison (N), et présente au moins un élément de traction (9), qui est placé en coopération avec l'organe d'entraînement (26) et l'élément (17) stockant l'énergie, **caractérisé en ce que**,

- l'élément de traction (9) s'étend, en partant de l'organe d'entraînement (26), sensiblement perpendiculairement à l'axe d'inclinaison (N) par rapport à un point de déviation (13) et, après la déviation, s'étend sensiblement parallèlement à l'axe d'inclinaison (N).

2. Tête de trépied selon la revendication 1, **caractérisé en ce que** l'élément stockant l'énergie est un ressort de compression (17), ou bien un ressort de traction, ou un ressort de torsion, ou un ressort de flexion.

3. Tête de trépied selon la revendication 1 ou 2, **caractérisé en ce que** l'élément de traction (9), sur le trajet entre l'organe d'entraînement et l'élément stockant l'énergie, est guidé au moins une fois, avec une évolution en descente, respectivement en contournement.

4. Tête de trépied selon les revendications 1, 2 et 3, **caractérisé en ce que** l'élément de traction (9), initialement est dévié sur la distance entre l'organe d'entraînement (26) et une extrémité d'au moins un ressort de compression (17), et l'association, entre l'organe d'entraînement (26) et l'axe d'inclinaison (N), la précontrainte élastique du ressort de compression (17) et l'espacement $r_b$ entre l'axe d'inclinaison (N) et l'emplacement de sortie (19), est choisie de manière que le couple antagoniste de compensation, respectivement le couple de rappel (M), satisfasse à la relation

$$M = \left(1 + \frac{r_{s,\max} - r_b + L_{vw,\min}}{\sqrt{r_b^2 + r_s^2 - 2.r_b.r_s.\cos\alpha}}\right).c.r_b.r_s.\sin\alpha$$

afin que la valeur de la fraction indiquée dans la parenthèse, c'est-à-dire ($r_{s,\max}$ - $r_b$ + $L_{vw,\min}$), soit égale à zéro, ou soit proche de zéro, respectivement que la valeur indiquée dans la parenthèse soit de 1 ou aussi près que possible de 1, formule dans laquelle :

$r_{s,\max}$ = distance maximale entre l'axe d'inclinaison et l'organe d'entraînement
$r_s$ = espacement entre l'axe d'inclinaison et l'organe d'entraînement
$r_b$ = espacement entre l'axe d'inclinaison et l'emplacement de sortie de l'élément de traction partant du point de déviation
$L_{vw,\min}$ = précontrainte élastique minimale
c = constante d'élasticité du ressort de compression individuel
$\alpha$ = angle d'inclinaison momentané

5. Tête de trépied selon une des revendications 1 à 4, **caractérisé en ce qu'**un faisceau de ressorts de compression (17) est prévu.

6. Tête de trépied selon l'une des revendications 1 à 5, **caractérisé en ce que** le au moins un ressort de compression (17) est un ressort hélicoïdal.

7. Tête de trépied selon l'une des revendications 1 à 6, **caractérisé en ce que** le au moins un ressort de compression (17) est réalisé sensiblement parallèlement à l'axe d'inclinaison (N) et est susceptible d'être comprimé dans cette direction.

8. Tête de trépied selon l'une des revendications 1 à 7, **caractérisé en ce que** le au moins un ressort de compression (17) est enserré entre un dispositif d'appui localement fixe (18) et un dispositif d'appui déplaçable (16), en particulier un dispositif d'appui déplaçable dans la direction de l'axe d'inclinaison (N).

9. Tête de trépied selon l'une des revendications 1 à 8, **caractérisé en ce qu'**une extrémité (14) de l'élément de traction (9) est reliée au dispositif d'appui (16) déplaçable, et l'autre extrémité (8) est reliée à l'organe d'entraînement (26).

10. Tête de trépied selon l'une des revendications 1 à 9, **caractérisé en ce que** le point de déviation (13) se trouvant entre les extrémités (8, 14) de l'élément de traction (9) est formé par un galet de déviation (10), susceptible de tourner autour de son axe de rotation (11) propre.

**11.** Tête de trépied selon la revendication 10, **caractérisé en ce que** le galet de déviation (10) est monté sensiblement à pivotement autour d'un axe passant par un point (19), auquel l'élément de traction (9), venant de l'organe d'entraînement (26), après la déviation, quitte le galet de déviation (10) dans la direction du dispositif d'appui (16) déplaçable.

**12.** Tête de trépied selon l'une des revendications 1 à 11, **caractérisé en ce que** l'élément de traction (9), après la déviation, s'étend vers le au dispositif d'appui (16) déplaçable.

**13.** Tête de trépied selon la revendication 12, **caractérisé en ce qu'**une première extrémité (14) de l'élément de traction est relié au dispositif d'appui (16) déplaçable, de là, en passant par le point de déviation (13), s'étend vers l'organe d'entraînement (26) où l'élément de traction (9) est relié à l'organe d'entraînement (26) et, de là, en passant par le point de déviation (13), s'étend en revenant vers le dispositif d'appui (16) déplaçable.

**14.** Tête de trépied selon la revendication 13, **caractérisé en ce que** l'élément de traction (9) est formé sous forme de câble sans fin.

**15.** Tête de trépied selon l'une des revendications 1 à 14, **caractérisé en ce qu'**au moins deux éléments de traction (9) sont disposés symétriquement par rapport à l'axe d'inclinaison (N).

**16.** Tête de trépied selon l'une des revendications 1 à 14, **caractérisé en ce que**, dans le cas d'un agencement symétrique des deux côtés de l'axe d'inclinaison (N), est prévu un élément de traction (9) traversant, réalisé en traversant dans la zone des organes d'entraînement (26).

**17.** Tête de trépied selon la revendication 16, **caractérisé en ce qu'**un dispositif à organe d'entraînement (7) est formé d'une combinaison de déviations, composée respectivement de deux points de déviation (13a, 13b).

**18.** Tête de trépied selon la revendication 17, **caractérisé en ce que** les points de déviation (13a, 13b) sont formés par un galet de déviation, sur les deux points de déviation un point de déviation étant formé par un galet de déviation (13b) fixe, et l'autre étant formé par un galet de déviation (13a) susceptible de pivoter.

**19.** Tête de trépied selon l'une des revendications 1 à 18, **caractérisé en ce que** le au moins un organe d'entraînement (26) est susceptible de tourner autour d'un axe parallèle à l'axe d'inclinaison (N).

**20.** Tête de trépied selon l'une des revendications 1 à 19, **caractérisé en ce que** le au moins un organe d'entraînement (26) est susceptible d'être modifié d'emplacement, perpendiculairement par rapport à l'axe d'inclinaison (N), de préférence d'une façon progressive continue, et est susceptible d'être fixé à la position momentanée.

**21.** Tête de trépied selon la revendication 13, **caractérisé en ce que** l'élément de traction (9) traverse ou enlace l'organe d'entraînement (26).

**22.** Tête de trépied selon l'une des revendications 1 à 15 et 19, 20, **caractérisé en ce que** l'élément de traction (9) est enserré dans l'organe d'entraînement (26).

**23.** Tête de trépied selon l'une des revendications 1 à 22, **caractérisé en ce que** l'élément de traction (9) est sans étirement.

**24.** Tête de trépied selon la revendication 23, **caractérisé en ce que** l'élément de traction (9) est pré-étiré.

**25.** Tête de trépied selon la revendication 23 ou 24, **caractérisé en ce que** le câble est un fil massif ou un câble, ayant été commis ou assemblé, respectivement tressé, en acier ou en fibres d'aramide.

**26.** Tête de trépied selon l'une des revendications 1 à 25, **caractérisé en ce qu'**au moins une cannelure (12), devant recevoir partiellement et guider l'élément de traction (9), est prévue dans le galet de déviation (10).

**27.** Tête de trépied selon l'une des revendications 1 à 26, **caractérisé en ce que** l'organe d'entraînement (26) est un tourillon d'entraînement, orienté parallèlement à l'axe d'inclinaison (N).

Fig. 1

**Fig. 2a**

Fig. 2b

Fig. 2c

Fig. 2d

Fig. 3

Fig. 4

## Fig. 5

## Fig. 6

Fig. 7

Fig. 8

Fig. 9

Fig. 10

Fig. 11